# EUROPEAN PATENT APPLICATION

(11) **EP 0 847 186 A2**
(43) Date of publication of application: **10.06.1998**
(21) Application number: 97309721.5
(22) Date of filing: 02.12.1997
(51) Int. Cl.: H04N 1/047

(54) **Raster output scanners**

(30) Priority: 06.12.1996 US 761681
(71) Applicant: XEROX CORPORATION, Rochester, New York 14644 (US)
(72) Inventor: Kubby, Joel A., Rochester, NY 14622 (US); Peeters, Eric, Mountain View, California 94041 (US); Vitomirov, Olivera, Webster, NY 14580 (US); Appel, James J., Rochester, NY 14618 (US); Nowak, William J., Webster, NY 14580 (US); Lofthus, Robert M., Honeoye Falls, NY 14472 (US); Chen, Jingkuang, Ann Abor, MI 48105 (US)
(74) Representative: Mackett, Margaret Dawn

(57) **Abstract**

Described herein is a raster output scanning system (10) which includes a photoreceptive drum (24) rotatably driven in a process direction by a drive unit (27). A modulated light beam unit (13) is scanned horizontally across the rotating drum (24) to construct a latent electrostatic image. To determine vertical positioning errors during each horizontal scan, an error feedback unit (18, 19) for determining light spot position error on the rotating drum (24) is used. To correct for any determined vertical mispositioning, the error feedback unit (18, 19) is connected to a mirror (15) positioned adjacent to the modulated light beam unit (13). The mirror (15) is electrostatically or electromagnetically pivotal to vertically adjust position of the light spot in a vertical process direction during each horizontal sweep thereof.

## Description

The present invention relates to raster output scanners, and is especially concerned with a raster output scanning system for producing a light beam capable of scanning a light spot across a movable photoreceptive unit. More particularly, the present invention relates to a light spot position error feedback controlled mirror for vertically adjusting light spot position in a process direction during horizontal fast scan sweeps of the light beam across the photoreceptive unit.

In most commercially available raster output printing systems a latent electrostatic image is generated by discharging a uniformly charged photoreceptor plate, drum, or belt with a raster scanned light beam. Generally, the light beam is a collimated beam of monochromatic laser radiation focused to form a light spot on the photoreceptor, with modulation of the scanned light beam acting to selectively discharge precisely defined regions on the photoreceptor. Scanning the light spot across the photoreceptor typically proceeds using a series of horizontal raster sweeps in a "fast scan" direction, with each horizontal sweep followed by a vertical displacement of the photoreceptor in what is commonly known as either a "process" or "slow scan" direction, since the rate of vertical displacement is usually much slower than the rate of horizontal sweep. The latent electrostatic image is toned with electrostatically charged plastic particles to form a direct image capable of being transferred onto a receiving medium such as paper. The toned image is fused at high temperature and pressure to form a robust print of the image.

As will be appreciated, high precision registration of a latent electrostatic image on the photoreceptor is required for high quality images. This is particularly true for color images, with each color separation needing to be registered to within micron tolerances. Even minor flaws in system optics, as well as random or periodic mechanical mispositioning of the photoreceptor, can result in visually detectable image defects. To help prevent such visual defects, timing based feedback controlled systems are employed to control light spot position in the horizontal fast scan direction. The spot position is measured, and based on errors in registration the start/stop timing of the light spot can be altered.

However, while registration of the optical image on the photoreceptor along the fast scan direction can be accurately controlled through various scan timing techniques, there is no such relatively simple control in the vertical slow scan direction. Traditionally this registration has been obtained by tightly controlling the mechanical tolerances of the belt transport system. Unfortunately, the necessary mechanical precision for maintaining this precision is only obtained at high manufacturing cost, and still requires costly regular service to maintain suitable performance levels. Other alternatives, including mechanical displacements of lens elements, use of acousto-optic or electro-optic modulators, use of sliding roof prisms, use of bimorph mirror cells, or movement of various mirror assemblies have been tried, but these solutions are generally too bulky, slow, or expensive for widespread adoption. In particular, most available mechanical systems are too slow to correct for high frequency motion control errors, while various acousto-optic or electro-optic systems capable of high frequency corrections are relatively expensive in terms of necessary associated control and calibration circuitry.

What is needed is a low cost apparatus for vertically steering the light beam to correct for mechanical or optical errors in light spot position in the slow scan direction in a raster output scanning system. The apparatus must be capable of accurately adjusting vertical position of a light spot during each horizontal sweep of the light beam across the photoreceptor.

It is therefore an object of the present invention to provide a raster output scanning system which meets these requirements.

In accordance with one aspect of the present invention, there is provided a raster output scanning system comprising a photoreceptive imaging unit, a modulated light beam producing unit for directing a light spot onto the photoreceptive imaging unit, and a horizontal scanning unit for sweeping the light spot from the modulated light beam producing unit horizontally across the photoreceptive imaging unit, characterized in that the scanning system further comprises a vertical scanning unit having a pivoting mirror positioned adjacent to the modulated light beam producing unit for vertically positioning the light spot in a vertical process direction on the photoreceptive imaging unit.

The present invention provides such a system having a photoreceptive imaging unit (usually a rotating belt or drum), and a modulated light beam producing unit for directing a light spot against the photoreceptive imaging unit. The system further has a horizontal scanning unit (usually a rotating polygon mirror) for sweeping the light spot from the modulated light beam producing unit horizontally across the photoreceptive imaging unit, and a vertical scanning unit having a pivoting mirror positioned adjacent to the modulated light beam producing unit for vertically positioning the light spot in a vertical process direction on the photoreceptive imaging unit. To provide for accurate vertical (eg. slow scan or process) corrections, an error feedback unit is used to determine actual or estimated light spot position error. For example, the error feedback unit can track timing marks on a photoreceptive drum or belt, with any non-periodic irregularities in timing mark detection corresponding to errors in the vertical process direction that need correction. The vertical scanning unit is connected to this error feedback unit to vertically adjust position of the light spot in the vertical process direction during each horizontal sweep across the photoreceptive imaging unit.

Because of its ease of manufacture, predictable performance, and durability, use of a microelectromechanical pivoting mirror system constructed at least in part from etch released crystalline silicon is preferred. The pivoting mirror includes a substrate, a silicon mirror polished to quarter wave or better optical tolerances pivotally mounted by torsion rods to the substrate, and a mechanism for pivoting the mirror. Typically, the mirror is controllably pivoted in response to applied electrostatic forces induced on the mirror by one or more electrostatic pads mounted on the substrate adjacent to the mirror. In a conventional raster output scanning system, a mirror having an area of less than about 1mm² can be reliably pivoted to redirect a light beam in the slow scan direction by as much as 1°, with greater or lesser degrees of redirection of course being possible with suitable optical designs.

For a better understanding of the present invention, reference will now be made, by way of example only, to the accompanying drawings in which:-
Figure 1 is a schematic view of raster output scanning system having a rotating photoreceptive drum, a horizontal fast scan unit for horizontally scanning a spot across the rotating photoreceptive drum, and a microelectromechanical torsion mirror for making fine adjustments to light spot position in a vertical process direction;
Figure 2 is an exploded perspective view of the microelectromechanical torsion mirror of Figure 1;
Figure 3 is a schematic side view of a raster output scanning system having the rotating photoreceptive drum and microelectromechanical torsion mirror of Figure 1, and a polygon scanner for horizontally scanning a spot across the rotating photoreceptive drum;
Figure 4 is a schematic top view of the raster output scanning system of Figure 3; and
Figure 5 is an exploded perspective view of an electromagnetically actuated torsion mirror capable of substituting for the electrostatically actuated torsion mirror of Figure 2.

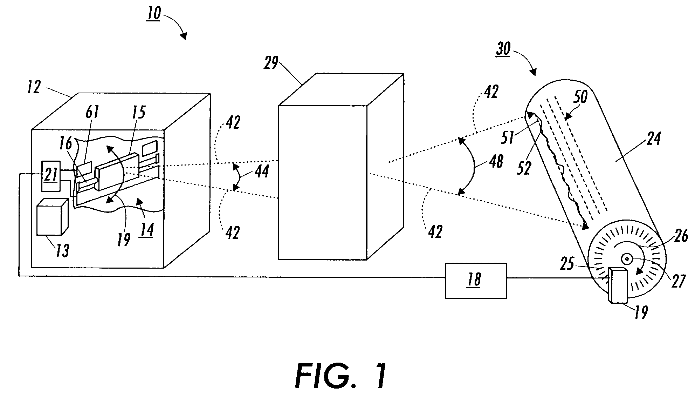

A schematic view of a raster output scanning system 10 is shown in Figure 1. The system 10 has a photoreceptive imaging unit 30 for receiving a light spot from a modulated light beam 42 produced by a light beam unit 13. Positioned intermediate in the optical path between light beam unit 13 and imaging unit 30 is a horizontal scanning unit 29. The horizontal scanning unit 29 can include rotating polygon mirrors, hologons, rotating diffraction gratings, oscillating bimorph mirrors, electromagnetically or electrostatically controlled torsion mirrors, or any other conventional scanning elements functioning to horizontally sweep (in a horizontal arc 48, commonly known as the fast scan direction) the light spot produced from the light beam unit 13 across the photoreceptive imaging unit 30.

As can be seen in Figure 1, horizontally sweeping the modulated light beam 42 across a photoreceptive drum 24 driven by drive unit 27 to rotate in the direction indicated by arrow 26 produces a series of scanned lines 50 that together form an electrostatic image capable of being toned and printed. For best image quality, ideally each scanned line would be substantially straight, with image modulation of the scanned beam being precisely registered with respect to earlier lines. However, since random or periodic mechanical mispositioning of the photoreceptive drum 24 in the vertical or process direction can result in visually detectable image defects, a motion sensor unit 19 and an associated error correction unit 18 must be used in accordance with the present invention. For example, by using shaft encoders, timing marks 25, or other electrically, optically, or acoustically detectable drum movement detection aids, the motion sensor unit can continuously track drum movement, including undesired vertical movements with respect to each horizontally scanned lined. If the expected drum movement does not correspond to the tracked drum motion, the error correction unit 18 send appropriate signals to a vertical scanning unit 12 having a pivoting mirror system 14 positioned adjacent to the modulated light beam unit 13. After receiving these error correction signals, the vertical scanning unit 12 then uses a mirror position control unit 21 to determine the appropriate mirror deflection (indicated by arc 19) required to deflect a mirror 15 using an electrostatic actuator 61, causing error compensating vertical adjustments to light spot position in a vertical process direction on the photoreceptive imaging unit 30. Deflection of the mirror 15 moves the beam 42 through arc 44 as shown prior to the horizontal scanning unit 29. In effect, an irregular path 52 (greatly magnified) of the light spot across the photoreceptive drum 24 during a horizontal scan absent vertical error correction can be smoothed when using vertical error correction to provide a straight horizontal scan line 51.

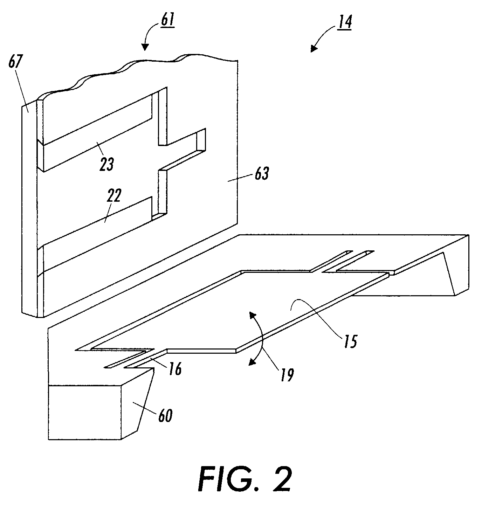

The mirror system 14, including the pivotal mirror 15, its substrate mount 60, and the electrostatic actuator 61 for controlling mirror pivot movement in accordance with the present invention, is schematically illustrated in the partially broken away and exploded perspective view of Figure 2. The mirror 15 is attached by torsion bars 16 to the substrate 60, allowing limited pivotal movement of the mirror 15 as indicated by arrow 19. The electrostatic actuator 61 includes an optically clear pyrex glass wafer substrate 67 having deposited electrostatic pads 22 and 23, and a patterned insulative spacing layer 63. The spacing layer 63 acts to define a gap between the substrate 60 and actuator 61 to enable pivoting movement of the mirror 15 when the substrate 60 is bonded to the actuator 61. In operation, one or more laser beams (not shown) passes through the optically clear pyrex glass wafer substrate 67 to deflect from the mirror 15. Applying a differential voltage to the pads 22 and 23 causes one or the other side of mirror 15 to be electrostatically attracted to the actuator 61, causing the mirror to pivot between about 0° to 5° with respect to the substrate 60. High frequency differential voltage adjustments between the electrostatic pads at about 100Hz to about 10kHz are mechanically translated into pivoting of the mirror, with 1000Hz operation being typically required for operation of the present invention.

While dimensions of the mirror system 14 can be varied to suitably adjust for required pivot speed, optical spacing of the mirror from a modulated laser source, laser beam spread (generally about 35° in a fast scan direction, and about 5° to 10° in the slow scan direction), and other system characteristics, a mirror 15 in accordance with the present invention will typically present an area of between about 100mm² to about 0.1mm², with areas of about 1mm² being typical. For example, a silicon torsion mirror such as shown in Figure 2 must be capable of pivoting about 1° with respect to the substrate and an impinging laser beam. Such a mirror can have a length of about 1000µm, a width of about 800µm, and a thickness of about 10µm (5-50µm being a typical thickness), with a full deflection reached by application of 50V to one of the electrostatic pads 22 or 23 (each pad being positioned about 10µm from mirror 15 in its non-deflected position).

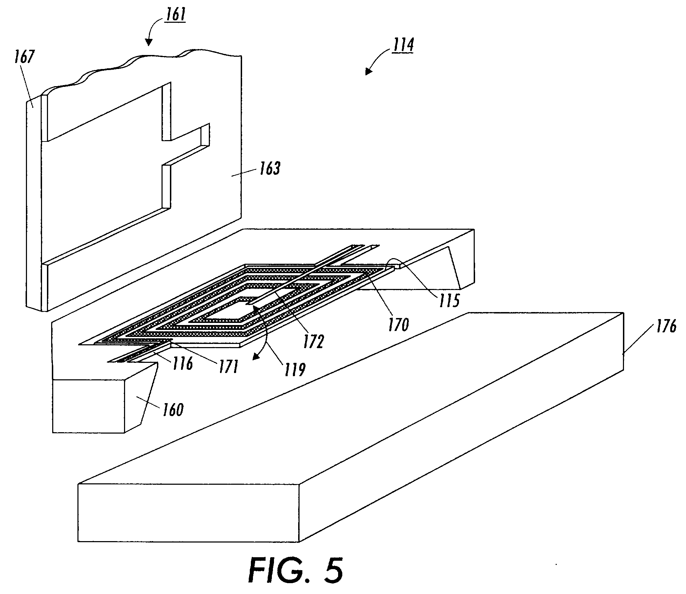

An alternative mirror structure also suitable for the present invention is schematically illustrated in exploded perspective view in Figure 5. Instead of being electrostatically actuated, a mirror system 114 in Figure 5 is electromagnetically driven using the combination of a planar electromagnetic coil 170 attached to a pivotal mirror 115 mounted on substrate 160. The coil can be embedded within the mirror as shown in Figure 5, attached below the mirror, or even patterned on the surface in certain embodiments. The planar coil 170 connects to electrical contacts (not shown) through an electrical lead 171 and an electrical bridge lead 172 connected to a center of the coil 170. Current direction is reversible to permit mirror actuation. The mirror 115 is attached by torsion bars 116 to the substrate 160, allowing limited pivotal movement of the mirror 115 as indicated by arrow 119. An optional cover 161 includes an optically clear pyrex glass wafer substrate 167 and a patterned insulative spacing layer 163. The spacing layer 163 acts to define a gap between the substrate 160 and the cover 161 to enable pivoting movement of the mirror 15 when the substrate 160 is bonded to the cover 161. A magnetic source 176 (which may be a permanent magnet, an electromagnetic, or any other convenient source of a magnetic field) is attached to the substrate or otherwise spaced apart from the mirror 115. In operation, one or more laser beams (not shown) passes through the optically clear pyrex glass wafer substrate 167 to deflect from the mirror 115. By reversing current direction (and the corresponding direction of the induced magnetic field) in coil 170, the mirror can be pivoted as opposite sides of the mirror (with respect to the rotation axis of the torsion bar) are respectively attracted and repelled by the magnetic source 176. As an additional advantage, if no cover is used, or if sufficient spacing between the cover and the mirror is allowed, electromagnetic actuation allows for much greater mirror deflections (of between 5° to 60°) than is ordinarily possible with conventional planar electrostatic actuating mechanisms such as illustrated with respect to Figure 2. As will be appreciated, various alternative electromagnetic structures. including dual or multiple coils on the mirror or substrate, embedded permanent magnetic structures, or other electromagnetic actuation devices can be employed, alone or in combination with electrostatic actuation mechanisms.

The substrate 60 and mirror 15 (as well as substrate 160, mirror 115, coil 170, and other necessary electrically conductive channels, pads or contacts of the embodiment of the invention illustrated with respect to Figure 5) can be constructed from a semiconductor wafer having optional surficial layers, patterned diffusion layers, ion implanted sections, or epitaxial coatings that act as etch stops. Suitable semiconductor materials can include but are not limited to pure or appropriately doped (usually by III-V dopants) materials such as silicon, polysilicon, amorphous silicon, germanium, gallium arsenide, germanium arsenide, GaP, CdSe, CdS, ZnS, AlAs, ZnTe, GaP, GaSb, InP, Insb, and numerous other conventional materials such as quartz or glass known to those skilled in the art. However, because of its high fatigue strength, high optical quality, and well characterized physical and chemical properties, use of undoped crystalline silicon derived from relatively inexpensive silicon wafers is preferred.

The mirrors 15 and 115 can be formed from a silicon wafer by masking and etching using conventional semiconductor processing techniques. For example, the mirror 15 can be batch fabricated by conventional etching techniques used in standard integrated circuit (IC) production for defining patterns in a semiconductor wafer. Bulk chemical or dry etching, typically used in IC production when deep trenches or vias must be formed in a wafer using anisotropic etch processes, can be used to remove substrate material from under the mirror. Etching of wafers can proceed with "wet processing", using chemicals such as potassium hydroxide in solution to remove non-masked material from a wafer. When very high dimensional precision or definition of fine structures in the mirror structure is required, an alternative etch processing technique commonly known as "dry etch processing" can be used. Dry etch processing encompasses many gas or plasma phase etching techniques ranging from highly anisotropic sputtering processes that bombard a wafer with high energy atoms or ions to displace wafer atoms into vapor phase (e.g. ion beam milling), to reactive ion etching with an ion containing plasma stream, to somewhat isotropic low energy plasma techniques that direct a plasma stream containing chemically reactive ions against a wafer to induce formation of volatile reaction products. Of course, as those skilled in the art will appreciate, the foregoing mirror construction techniques can be used alone, in combination, or in conjunction with other conventional materials processing techniques, including micromachining, molding, or casting techniques.

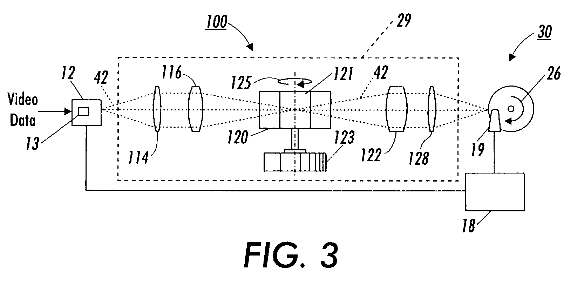

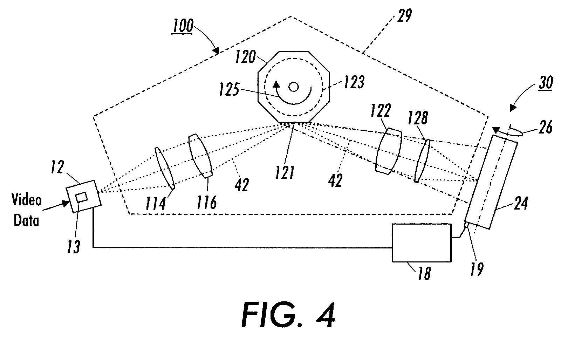

The foregoing described mirror 15 of mirror system 14 (or mirror 115 of mirror system 114) can be used for adjusting vertical light spot position in a raster output scanning system 100 such as illustrated schematically in side view as Figure 3 and top view as Figure 4. As seen in Figures 3 and 4, the system 100 translates input image or video data into the modulated laser light beam 42, horizontally scans it with horizontal scanning unit 29, and images it on a photoreceptive drum in the imaging unit 30. The beam 42 is collimated by a spherical collimating lens 114 and enters cylindrical lens 116 for additional focusing in the slow scan direction. The focused beam 42 is incident upon a rotating polygon 120 having at multiple mirrored facets 121, the polygon 120 being rotated by motor 123. As shown most clearly with respect to Figure 4, the rotation of the polygon 120 in the direction indicated by arrow 125 causes the beam 42 to be deflected, continuously scanning the beam 42. The horizontally scanned beam 42 is optically corrected by a postscan lens 122 that reconfigures the beam 42 to a circular or elliptical cross section, focuses the beam against the photoreceptive drum 24, and corrects for scan non-linearity (f-theta correction). An additional corrective toroidal lens 128 can also be used to correct for wobble caused by scanner motion or facet errors when needed. This optically corrected beam is horizontally scanned across the photoreceptive drum 24 (rotating in the process direction at about 10 spi as indicated by arrow 26), as previously discussed in connection with Figure 1. Typically, the rate of horizontal scan for a polygon based raster output scanning system 100 such as illustrated in Figures 3 and 4 proceeds at between about 300 and 600 spi, though greater or lesser speeds can be utilized. Throughout this horizontal scan, the combination of motion sensor 19 and error correction unit 18 determine irregularities in movement of the drum 24, providing corrective signals to the vertical scanning unit 12 for vertical adjustments in position of beam 42 (and its corresponding light spot on drum 24) as previously discussed in connection with Figure 1.

As well as correcting slight vertical errors in position as previously discussed (errors of less than one scan line vertical spacing), the present invention advantageously allows for correcting vertical errors in position of between 1 to 5 lines. This is particularly useful in conjunction with photoreceptive belts. As compared to the more rigid photoreceptive drums, photosreceptive belts routinely have errors in vertical positioning of between 1 and 2 lines. Use of the present invention allows for suitable vertical corrections to be made optically, reducing the stringent mechanical requirements for photoreceptive belt transport. In addition, as will be appreciated, the ability for high speed vertical repositioning of a light beam also allows for multiple line simultaneous scanning, with vertical corrections being made sufficiently fast for two or more adjacent horizontal scan lines to be simultaneously drawn by rapid vertical switching between separated lines during a single horizontal sweep.

## Claims

1. A raster output scanning system (10; 100) comprising
a photoreceptive imaging unit (30),
a modulated light beam producing unit (13) for directing a light spot onto the photoreceptive imaging unit (30), and
a horizontal scanning unit (29) for sweeping the light spot from the modulated light beam producing unit (13) horizontally across the photoreceptive imaging unit (30),
characterized in that the scanning system further comprises a vertical scanning unit (12) having a pivoting mirror (15; 115) positioned adjacent to the modulated light beam producing unit (12) for vertically positioning the light spot in a vertical process direction on the photoreceptive imaging unit (30).

2. A system according to claim 1, further comprising a drive unit (27) for moving the photoreceptive imaging unit (30) in a process direction.

3. A system according to claim 1 or 2, further comprising an error feedback unit (18, 19) for determining light spot position error, and wherein the vertical scanning unit (12) is connected to the error feedback unit (18, 19) to vertically adjust position of the light spot in the vertical process direction during each horizontal sweep across the photoreceptive imaging unit (30).

4. A system according to any one of claims 1 to 3, wherein the pivoting mirror (15) further comprises a substrate (60), the mirror (15) being pivotally mounted by torsion rods (16) to the substrate (60), and at least one electrostatic pad (22, 23) mounted adjacent to the mirror (15) to controllably pivot it in response to applied voltage.

5. A system according to claim 4, wherein the mirror (15) has an area of about 1mm².

6. A system according to claim 4 or 5, wherein the mirror (15) is formed from crystalline silicon.

7. A system according to any one of claims 1 to 3, wherein the pivoting mirror (115) further comprises a substrate (160), the mirror (115) being pivotally mounted by torsion rods (116) to the substrate (160), a first magnetic source (176) positioned adjacent to the substrate (160), and a second magnetic source (170) positioned on the mirror (115) to controllably pivot it in response to a varying electromagnetic field.

8. A system according to claim 7, wherein the second magnetic source (170) comprises an electromagnetic coil.

9. A system according to any one of the preceding claims, wherein the horizontal scanning unit (29) has a rotating polygon mirror (120).

10. A system according to any one of the preceding claims, wherein the photoreceptive imaging unit (30) has a rotating drum (24) rotatably driven in a process direction by the drive unit (27).
